# EUROPÄISCHE PATENTSCHRIFT

(11) **EP 3 035 000 B1**
(45) Veröffentlichungstag und Bekanntmachung des Hinweises auf die Patenterteilung: **05.12.2018**
(21) Anmeldenummer: 15185475.9
(22) Anmeldetag: 16.09.2015
(51) Int. Cl.: G01D 5/244, H04L 7/00

(54) **VORRICHTUNG UND VERFAHREN ZUR ÜBERPRÜFUNG EINES ARBEITSTAKTSIGNALS EINER POSITIONSMESSEINRICHTUNG**
DEVICE AND METHOD FOR CHECKING A WORK CYCLE SIGNAL OF A POSITION MEASUREMENT DEVICE
DISPOSITIF ET PROCEDE DE VERIFICATION D'UN SIGNAL DE TRAVAIL D'UN DISPOSITIF DE MESURE DE POSITION

(30) Priorität: 15.12.2014 DE 102014225867
(43) Veröffentlichungstag der Anmeldung: 22.06.2016
(73) Patentinhaber: Dr. Johannes Heidenhain GmbH, 83301 Traunreut (DE)
(72) Erfinder: VON BERG, Martin, 83236 Übersee (DE)

(56) Entgegenhaltungen:
- EP-A1- 0 293 479
- WO-A2-02/095513
- DE-A1-102008 027 902
- DE-A1-102008 031 498
- GB-A- 2 508 788

## Beschreibung

### BEZEICHNUNG DER ERFINDUNG

Vorrichtung und Verfahren zur Überprüfung eines Arbeitstaktsignals einer Positionsmesseinrichtung

### GEBIET DER TECHNIK

Die Erfindung betrifft eine Vorrichtung zur Überprüfung eines Arbeitstaktsignals einer Positionsmesseinrichtung nach Anspruch 1, sowie ein Verfahren zur Überprüfung eines Arbeitstaktsignals einer Positionsmesseinrichtung nach Anspruch 6.

### STAND DER TECHNIK

Ein weit verbreitetes Einsatzgebiet für Positionsmesseinrichtungen sind numerisch gesteuerte Werkzeugmaschinen. Sie werden dort dafür verwendet, um Lageistwerte zu ermitteln, die eine Folgeelektronik, beispielsweise eine numerische Steuerung, benötigt, um Sollwerte für Regelkreise zu berechnen, mit denen der Vorschub eines Werkzeugs oder eines Werkstückes kontrolliert wird. Drehgeber oder Winkelmessgeräte sind hierzu beispielsweise direkt oder indirekt mit der Welle eines Motors gekoppelt, Längenmessgeräte beispielsweise mit einem verfahrbaren Werkzeugschlitten.

Moderne Positionsmesseinrichtungen erzeugen digitale, absolute Messwerte. Dabei kann es sich sowohl um Positionswerte, als auch um aus dem zeitlichen Verlauf von Positionswerten abgeleitete Messwerte, wie zum Beispiel Geschwindigkeitswerte oder Beschleunigungswerte handeln. Darüber hinaus sind Positionsmesseinrichtungen bekannt, die zusätzlich Messwerte von innerhalb oder außerhalb der Positionsmesseinrichtung angeordneten Sensoren, z.B. Temperatur- oder Vibrationssensoren, ermitteln. Die Übertragung der Messwerte von der Positionsmesseinrichtung zur Folgeelektronik erfolgt über digitale Datenübertragungsschnittstellen. Beispielhaft für eine gattungsgemäße Positionsmesseinrichtung mit einer digitalen Datenübertragungsschnittstelle sei hier die EP 0 660 209 A1 genannt. Zur Bereitstellung der notwendigen Funktionen - Erfassung von Positionssignalen, Verarbeitung der Positionssignale zu digitalen Positionswerten oder hiervon abgeleiteten Messwerten, Kommunikation mit der Folgeelektronik - sind aufwändige analoge und digitale Schaltungsblöcke notwendig.

Eine zentrale Einheit in Positionsmesseinrichtungen ist ein Taktgenerator, der ein Arbeitstaktsignal erzeugt, das als Zeitbasis für viele Funktionsblöcke der Positionsmesseinrichtung dient, beispielsweise für A/D-Wandler, Zustandsautomaten, die digitale Datenübertragungsschnittstelle oder ggf. einen Mikroprozessor oder -controller als Bestandteil einer zentralen Verarbeitungseinheit. Die DE102008027902 A1 und die DE102008031498 A1 beschreiben Positionsmesseinrichtungen mit Taktgenerator.

Ändert sich durch eine Fehlfunktion die Frequenz des Arbeitstaktsignals, so kann es passieren, dass Funktionsblöcke außerhalb ihrer Spezifikation betrieben werden, was wiederum zu Messfehlern, sporadischen Ausfällen, etc. führen kann.

Manche der so hervorgerufenen Fehler, insbesondere wenn sie in fehlerhaften Messwerten resultieren, können in der Folgeelektronik nicht erkannt werden. In ungünstigen Fällen kann dadurch beispielsweise in einer Werkzeugmaschine das gerade in Bearbeitung befindliche Werkstück unbrauchbar werden, oder sogar die Werkzeugmaschine einen Schaden davontragen. Noch schlimmer als der materielle Schaden, der entstehen kann, ist eine Verletzungsgefahr für das Bedienpersonal. Es ist daher wichtig, die ordnungsgemäße Funktion des Taktgenerators zu gewährleisten.

### ZUSAMMENFASSUNG DER ERFINDUNG

Es ist daher Aufgabe der Erfindung, eine Vorrichtung zur Überwachung eines Arbeitstaktsignals einer Positionsmesseinrichtung zu schaffen.

Diese Aufgabe wird gelöst durch eine Vorrichtung nach Anspruch 1. Vorteilhafte Details einer derartigen Vorrichtung ergeben sich aus den von Anspruch 1 abhängigen Ansprüchen.

Weiter ist es Aufgabe der Erfindung, ein Verfahren zur Überwachung des Arbeitstaktsignals einer Positionsmesseinrichtung anzugeben.

Diese Aufgabe wird gelöst durch ein Verfahren nach Anspruch 6. Vorteilhafte Details des Verfahrens ergeben sich aus den von Anspruch 6 abhängigen Ansprüchen.

Weitere Vorteile sowie Einzelheiten der vorliegenden Erfindung ergeben sich aus der nachfolgenden Beschreibung anhand der Figuren.

### KURZE BESCHREIBUNG DER ZEICHNUNGEN

Es zeigt
- Figur 1: ein Blockdiagramm einer Positionsmesseinrichtung und einer Folgeelektronik, die über einen Datenübertragungskanal miteinander verbunden sind,
- Figur 2: eine Pulserzeugungseinheit,
- Figur 3: ein Signaldiagramm von einem Befehlszyklus bei einer Master-Slave-Architektur,
- Figur 4: ein erstes Ausführungsbeispiel einer Pulsmesseinheit,
- Figur 5: ein weiteres Ausführungsbeispiel einer Pulsmesseinheit,
- Figur 6: ein weiteres Ausführungsbeispiel einer Pulsmesseinheit und
- Figur 7: ein weiteres Ausführungsbeispiel einer Pulsmesseinheit.

### BESCHREIBUNG DER AUSFÜHRUNGSFORMEN

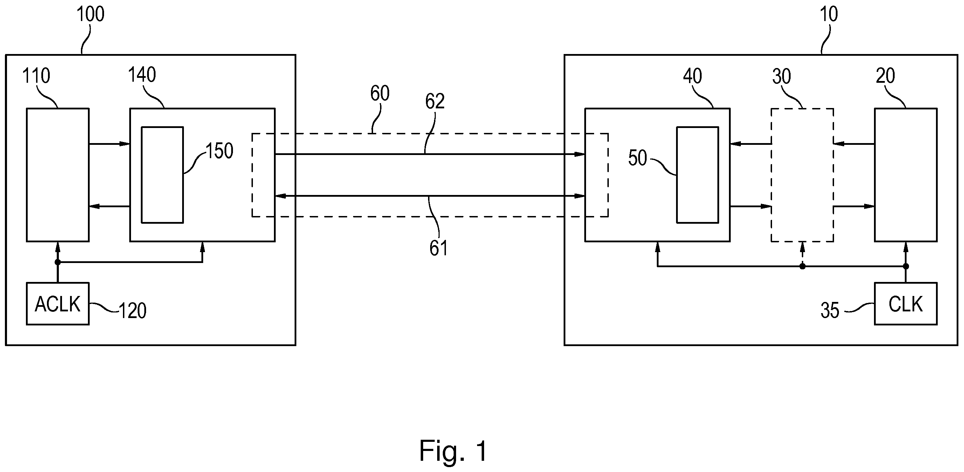

Figur 1 zeigt ein Blockdiagramm einer Positionsmesseinrichtung 10 und einer Folgeelektronik 100, die über einen Datenübertragungskanal 60 miteinander verbunden sind. Die Positionsmesseinrichtung 10 und die Folgeelektronik 100 stehen hierbei stellvertretend für Geräte der Automatisierungstechnik.

Die Positionsmesseinrichtung 10 weist Messgerätekomponenten in Form einer Positionserfassungseinheit 20 und einer optionalen Verarbeitungseinheit 30 auf. Die Positionserfassungseinheit 20 ist geeignet ausgestaltet, um digitale Positionswerte zu erzeugen. Sie umfasst hierzu beispielsweise eine Maßverkörperung mit einer Messteilung, eine Abtasteinheit für deren Abtastung, sowie eine Signalverarbeitungselektronik zur Bildung des digitalen Positionswerts aus Abtastsignalen der Abtasteinheit, die durch die Abtastung der Messteilung generiert werden. Maßverkörperung und Abtasteinheit sind in bekannter Weise relativ zueinander beweglich angeordnet und mechanisch mit Maschinenteilen verbunden, deren Position zueinander gemessen werden soll. Handelt es sich bei der Positionsmesseinrichtung 10 um einen Drehgeber, mit dem die Winkelposition der Welle eines Elektromotors gemessen werden soll, so ist die Abtasteinheit (bzw. das Gehäuse des Drehgebers) beispielsweise an einem Motorgehäuse angebracht und eine Welle des Drehgebers, die mit der Maßverkörperung drehfest verbunden ist, ist über eine Wellenkupplung mit der zu messenden Motorwelle verbunden.

Insbesondere um für die digitalen Schaltungsteile eine Zeitbasis, bzw. ein definiertes Zeitraster zur Verfügung zu stellen, ist in der Positionsmesseinrichtung 10 weiter ein Taktgenerator 35 angeordnet. Er liefert wenigstens ein Arbeitstaktsignal CLK, das digitalen Zustandsautomaten, Mikroprozessoren, Mikrokontrollern etc. zugeführt ist.

Das physikalische Abtastprinzip, das der Positionserfassungseinheit 20 zugrunde liegt, ist für die vorliegende Erfindung bedeutungslos. So kann es sich um ein optisches, magnetisches, kapazitives oder induktives Abtastprinzip handeln. Entsprechend den notwendigen Verarbeitungsschritten, die erforderlich sind, um die Abtastsignale der Abtasteinheit zu Positionswerten zu verarbeiten, umfasst die Signalverarbeitungselektronik Funktionseinheiten, die Verarbeitungsschritte wie Verstärkung, Signalkorrektur (Offset-, Amplituden-, Phasenkorrektur), Interpolation, Zählung von Teilungsperioden, A/D-Wandlung,... ausführen.

Für die Übertragung von Steuersignalen und/oder Daten zwischen der Positionserfassungseinheit 20 und der Verarbeitungseinheit 30 sind geeignete Signalleitungen vorgesehen. Sie dienen insbesondere dazu, die in der Positionserfassungseinheit 20 generierten Positionswerte zur Verarbeitungseinheit 30 zu übertragen.

In der Verarbeitungseinheit 30 werden die Positionswerte ggf. weiter verarbeitet um Ausgabedaten zu erhalten. Hierzu können Verarbeitungsschritte wie Skalierung, Änderung des Datenformats, Fehlerkorrektur, etc. erforderlich sein, die in der Verarbeitungseinheit 30 rein digital ausgeführt werden. Ausgabedaten können aber nicht nur Positionswerte, sondern auch Geschwindigkeits- oder Beschleunigungswerte sein, die in der Verarbeitungseinheit 30 aus mehreren, hintereinander erzeugten Positionswerten berechnet werden.

Zur Kommunikation mit der Folgeelektronik 100 einerseits und den Messgerätekomponenten 20, 30 andererseits ist in der Positionsmesseinrichtung 10 weiter eine Schnittstelleneinheit 40 angeordnet. Insbesondere erfolgt über die Schnittstelleneinheit 40 die Übertragung der Ausgabedaten zur Folgeelektronik 100. Die Ausgabedaten werden der Schnittstelleneinheit 40 über geeignete Signalleitungen von der Verarbeitungseinheit 30 oder der Positionserfassungseinheit 20 übermittelt. Auch der Schnittstelleneinheit 40 ist ein Taktsignal zugeführt, das als Zeitbasis für ihre internen Abläufe dient. Dabei kann es sich um das Arbeitstaktsignal CLK handeln.

Die physikalische Verbindung zur Übertragung von Befehlen und Daten zwischen der Schnittstelleneinheit 40 der Positionsmesseinrichtung 10 und einer korrespondierenden Schnittstelleneinheit 140 der Folgeelektronik 100 wird über den Datenübertragungskanal 60 hergestellt, der in diesem Ausführungsbeispiel eine bidirektional ausgeführte Datenleitung 61 und eine Taktleitung 62 umfasst. Über die Taktleitung 62 wird von der Folgeelektronik 100 zur Positionsmesseinrichtung 10 ein Schnittstellentaktsignal übertragen, dass die Datenübertragung auf der Datenleitung 61 synchronisiert. Eine derartige Anordnung ist beispielsweise aus der EP 0 660 209 A1 bekannt.

Alternativ könnten auch zwei unidirektional betriebene Datenleitungen vorgesehen sein. Voraussetzung für die vorliegende Erfindung ist lediglich, dass über die Datenleitung 61 Datensignale von der Positionsmesseinrichtung 10 zur Folgeelektronik 100 übertragbar sind. Die Übertragung kann beispielsweise in Form von Datenrahmen erfolgen.

Die physikalische Übertragung der Datensignale kann differentiell, beispielsweise entsprechend dem weit verbreiteten RS-485-Standard, erfolgen. In diesem Fall sind für die Datenleitung 61 und die Taktleitung 62 jeweils Leitungspaare vorzusehen. In den Schnittstelleneinheiten 40, 140 werden die differentiellen Signale für die Übertragung aus massebezogenen (single-ended) Signalen generiert, bzw. aus eintreffenden differentiellen Signalen wiederum für die weitere Verarbeitung massebezogene Signale gewonnen. Hierfür sind geeignete Sende- und Empfängerbausteine vorhanden. Die Leitungen sind, ggf. zusammen mit weiteren Leitungen zur Stromversorgung der Positionsmesseinrichtung in einem Schnittstellenkabel angeordnet.

Alternativ kann die Signalübertragung auch auf optischem Wege, beispielsweise über Lichtwellenleiter erfolgen.

Die Abläufe in der Folgeelektronik 100 werden von einer internen Steuereinheit 110 gesteuert. Handelt es sich bei der Folgeelektronik 100 um eine Numerische Steuerung oder ein sonstiges Steuergerät der Automatisierungstechnik, so fordert die Steuereinheit 110 über die Schnittstelleneinheit 140 beispielsweise kontinuierlich Positionswerte von der Positionsmesseinrichtung 10 an, um Positionsistwerte (Lageistwerte) zu erhalten, die sie für Regelkreise benötigt, etwa um mechanische Komponenten einer Maschine über einen Antrieb präzise zu positionieren (Servoantrieb).

Auch in der Folgeelektronik 100 ist ein Taktgenerator 120 angeordnet, der ein Arbeitstaktsignal ACLK generiert, das zur Bildung einer Zeitbasis, bzw. eines Zeitrasters der Steuereinheit 110 und der Schnittstelleneinheit 140 zugeführt ist.

In der Schnittstelleneinheit 40 der Positionsmesseinrichtung 10 ist nun eine Pulserzeugungseinheit 50 angeordnet. Mit ihr ist ein Testpuls 220 erzeugbar, der eine Pulsdauer tm aufweist und der unter Verwendung des Arbeitstaktsignals CLK der Positionsmesseinrichtung 10 generiert wird. Dem Testpuls 220 liegt somit das Zeitraster des Arbeitstaktsignals CLK der Positionsmesseinrichtung 10 zugrunde. Der Testpuls 220 ist über die Datenleitung 61 zur Folgeelektronik 100 übertragbar. Dort wird die Pulsdauer tm des Testpulses 220 von einer funktional sicher ausgeführten Pulsmesseinheit 150, die in der Schnittstelleneinheit 140 angeordnet ist, gemessen und wenigstens ein Messwert, der die Pulsdauer tm des Testpulses 220 repräsentiert, wird zur Auswertung an die Steuereinheit 110 ausgegeben. Der Messung der Pulsdauer tm liegt das Zeitraster des Arbeitstaktsignals ACLK der Folgeelektronik 100 zugrunde.

Die funktional sichere Auslegung der Pulsmesseinheit 150 wird durch Einsatz einer Zeitmesseinheit, die forciert sich ändernde Messergebnisse generiert und/oder durch die Verwendung mehrerer Zeitmesseinheiten die redundante Messergebnisse generieren, realisiert. Durch die funktional sichere Auslegung der Pulsmesseinheit 150 wird erreicht, dass Fehlfunktionen der Pulsmesseinheit 150 nicht dazu führen können, dass die Überwachung des Arbeitstaktsignals CLK der Positionsmesseinrichtung 10 unwirksam wird und beispielsweise gültige Messwerte der Pulsdauer tm ausgegeben werden, obwohl durch einen Defekt überhaupt keine Messung mehr stattfindet.

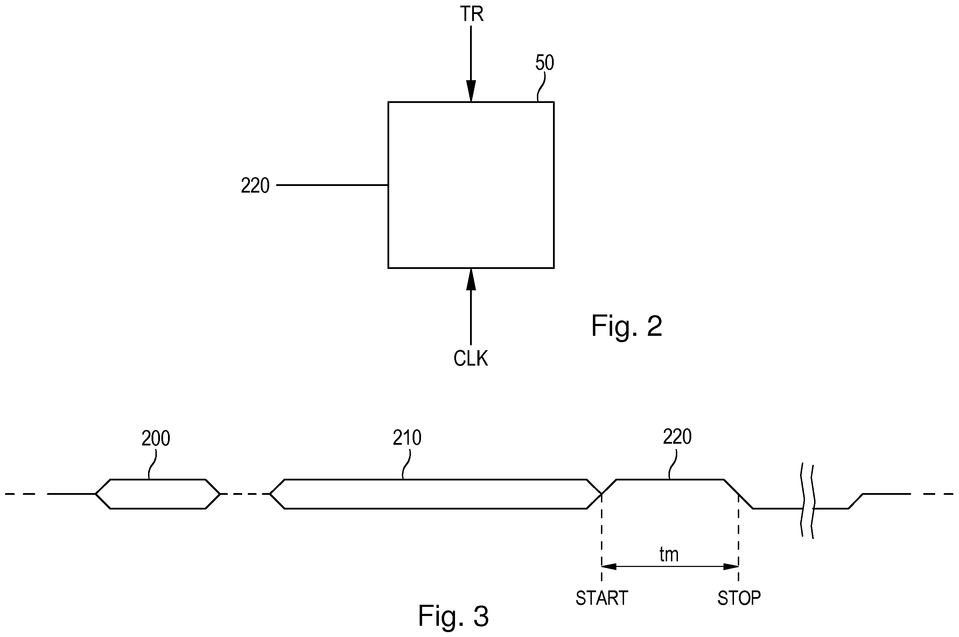

Die Erzeugung des Testpulses 220 soll nun anhand der Figuren 2 und 3 näher erläutert werden, wobei Figur 2 eine Ausführungsform einer Pulserzeugungseinheit 50 zeigt und Figur 3 ein Signaldiagramm eines für die Automatisierungstechnik typischen Datenaustausches zwischen der Positionsmesseinrichtung 10 und der Folgeelektronik 100, der um die Übertragung des Testpulses 220 erweitert wurde.

Der Pulserzeugungseinheit 50 ist das Arbeitstaktsignal CLK der Positionsmesseinrichtung 10, sowie ein Triggersignal TR zugeführt. Wie oben bereits ausgeführt, bildet das Arbeitstaktsignal CLK ein Zeitraster, auf dessen Basis Funktionen der Positionsmesseinrichtung 10, insbesondere in der Positionserfassungseinheit 20, der Verarbeitungseinheit 30 und ggf. auch in der Schnittstelleneinheit 40, ablaufen. Es sei an dieser Stelle darauf hingewiesen, dass in einer Positionsmesseinrichtung auch mehrere Taktsignale verschiedener Frequenzen zum Einsatz kommen können. Diese werden häufig von einem einzigen Taktsignal abgeleitet, das vom Taktgenerator 35 erzeugt wird. Das in den Ausführungsbeispielen verwendete Arbeitstaktsignal CLK steht stellvertretend für ein zu überwachendes Taktsignal.

Das Triggersignal TR wird in der Schnittstelleneinheit 40 erzeugt und bestimmt den Startzeitpunkt START des Testpulses 220, der über die Datenleitung 61 zur Folgeelektronik 100 ausgegeben wird. Die Pulsdauer tm wird unter Verwendung des Arbeitstaktsignals CLK festgelegt. Mit Vorteil basiert die Pulserzeugungseinheit 50 auf einem digitalen Zähler, dessen Zählschritte vom Arbeitstaktsignal CLK ausgelöst werden. Das Eintreffen des Triggersignals TR bewirkt zum einen den Beginn der Ausgabe des Testpulses 220 und zum anderen den Start des Zählvorgangs. Erreicht der Zähler nach Ablauf der gewünschten Pulsdauer tm zu einem Stoppzeitpunkt STOP einen definierten Zählwert, so wird die Ausgabe des Testpulses 220 beendet und der Zähler wieder zurückgesetzt. Zur Feststellung des definierten Zählwerts kann ein Vergleichsbaustein vorgesehen sein.

Das Signaldiagramm, das in Figur 3 dargestellt ist, zeigt einen typischen Befehlszyklus in einer Master-Slave-Architektur, bei der die Folgeelektronik 100 ein Master und die Positionsmesseinrichtung 10 ein Slave ist. In einer derartigen Architektur werden alle Datenübertragungen vom Master initiiert. Im Beispiel sendet die Folgeelektronik 100 einen Befehlsdatenrahmen 200 (beispielsweise mit einem Positionsanforderungsbefehl) zur Positionsmesseinrichtung 10, die darauf mit einem Antwortdatenrahmen 210 (mit dem angeforderten Positionswert) antwortet. Da die Datenleitung 61 bidirektional betrieben wird, findet zwischen dem Befehlsdatenrahmen 200 und dem Antwortdatenrahmen 210 eine Umschaltung der Datenrichtung statt. Die Datenübertragung wird nach dem Antwortdatenrahmen 210 noch nicht beendet, sondern es wird der Testpuls 220 mit der Pulsdauer tm angehängt, der durch das Startereignis START und das Stoppereignis STOP begrenzt wird. Nach der Übertragung des Testpulses 220 wird die Datenleitung 61 nach einer gewissen Zeit hochohmig geschaltet (Abschalten der Datentreiber in der Positionsmesseinrichtung 10, dargestellt durch ein mittleres Signalpotential), so dass die Folgeelektronik 100 wieder einen Befehlsdatenrahmen 200 senden kann.

Abweichend zu diesem Beispiel kann der Testpuls 220 auch separat, anstelle des Antwortdatenrahmens 210 (beispielsweise aus Antwort auf einen entsprechenden Befehl der Folgeelektronik 100), vor dem Antwortdatenrahmen 210, zwischen zwei Antwortdatenrahmen 210, oder zeitlich vom Antwortdatenrahmen 210 beabstandet gesendet werden.

Nicht dargestellt wurde in Figur 3 das Schnittstellentaktsignal auf der Taktleitung 62, mit dem die Übertragung der Datenrahmen 200, 210 synchronisiert wird. Insgesamt ist das Signaldiagramm lediglich schematisch zu betrachten, Signalpegel, Zeitdauern etc. sind willkürlich gewählt und hängen bei einer Realisierung der Erfindung vom physikalischen Übertragungsprinzip ab.

Da Störungen des Arbeitstaktsignals CLK der Positionsmesseinrichtung 10 (z.B. statische oder dynamische Frequenzänderungen, fehlende Taktimpulse, kurze Störimpulse,...) nicht zwingend einen Ausfall der Generierung von Messwerten oder der Datenübertragung zur Folgeelektronik 100 bewirken, ist eine sichere Auswertung der empfangenen Testpulse 220 entscheidend für die Eignung des Systems Positionsmesseinrichtung 10 - Folgeelektronik 100 für Applikationen, die hohe Anforderungen an die Funktionssicherheit stellen. Eine nur schwer zu entdeckende Fehlfunktion einer Pulsmesseinheit ist es, wenn sich der Messwert nicht mehr ändert. Dieses Fehlerbild kann durch einen defekten Zähler, der für die Zeitmessung verwendet wird, hervorgerufen werden, wenn er am Ausgang stets den gleichen Wert ausgibt, der Messwert also "einfriert". Dieser Fehler kann beispielsweise auch durch einen fehlerhaften Registerbaustein entstehen. In einem derartigen Fall ist die Überwachung des Arbeitstaktsignals CLK unbemerkt außer Kraft gesetzt. Erfindungsgemäß ist die Pulsmesseinheit daher funktional sicher ausgestaltet.

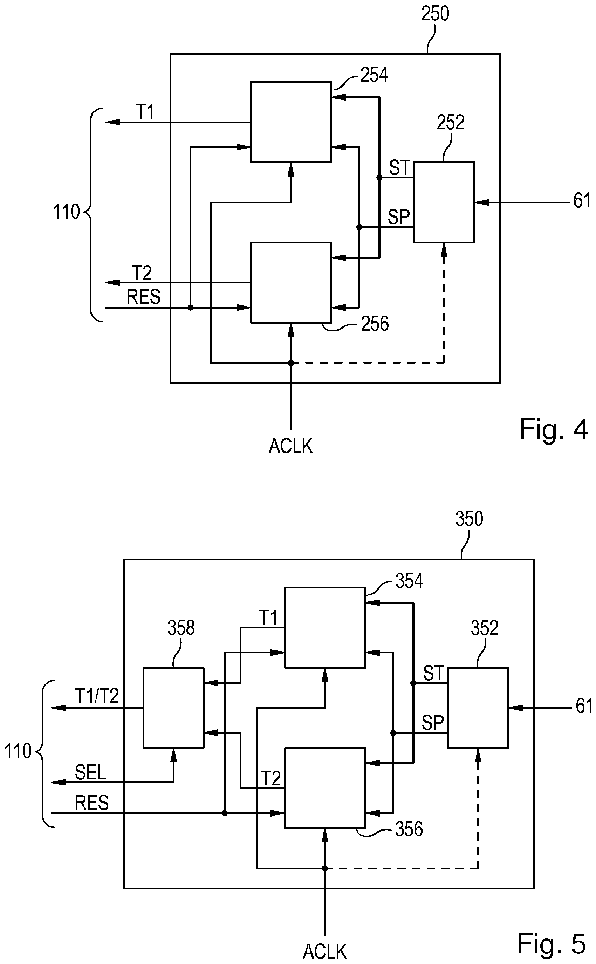

Die Figuren 4 bis 7 zeigen Ausführungsbeispiele für Pulsmesseinheiten. Sie können jeweils an Stelle der Pulsmesseinheit 150 in Figur 1 eingesetzt werden.

Figur 4 zeigt eine erste Ausführungsform einer Pulsmessinheit 250. Sie umfasst eine Start-/Stopp-Einheit 252, eine erste Zeitmesseinheit 254 und eine zweite Zeitmesseinheit 256.

Der Start-/Stopp-Einheit 252 sind die Datensignale der Datenleitung 61 zugeführt. Sie ist geeignet ausgestaltet, in Abhängigkeit vom Startereignis START und vom Stoppereignis STOP ein Startsignal ST und ein Stoppsignal SP an die Zeitmesseinheiten 254, 256 auszugeben.

Wie in Figur 3 dargestellt, kann als Startereignis START der Abschluss des Empfangs eines Antwortdatenrahmens 210 gewählt sein, gekennzeichnet durch die letzte Signalflanke des Antwortdatenrahmens 210, oder dem Eintreffen/Detektieren des letzten Bits des Antwortdatenrahmens 210 (Stoppbit der Datenübertragung) in der Schnittstelleneinheit 140. Die Information über den Abschluss des Empfangs des Antwortdatenrahmens 210 kann der Start-/Stopp-Einheit von der Schnittstelleneinheit 140 signalisiert werden, die die von der Positionsmesseinrichtung 10 eintreffenden Datenrahmen auswertet. Das Stoppereignis STOP ist im gewählten Beispiel die nächste auf das Startereignis START folgende Signalflanke.

Der Start-/Stoppeinheit 252 kann das Arbeitstaktsignal ACLK der Folgeelektronik 100 zugeführt sein, etwa um die eintreffenden Signale im Zeitraster des Arbeitstaktsignals ACLK abzutasten und so Pegelwechsel (Signalflanken) zu detektieren.

Der Vollständigkeit halber sie darauf hingewiesen, dass auch in der Folgeelektronik 100 mehrere Taktsignale vorhanden sein können, entweder abgeleitet von einem Mastertaktsignal, oder aber unabhängig voneinander erzeugt. Das Arbeitstaktsignal ACLK steht stellvertretend für ein Taktsignal, das geeignet ist, um die Dauer des Testpulses 220 zu messen.

Das Arbeitstaktsignal ACLK ist auch den Zeitmesseinheiten 254, 256 zugeführt und dient als Zeitbasis für die Zeitmessungen. Nach Eintreffen des Startsignals ST starten die Zeitmesseinheiten 254, 256 die Zeitmessungen, das Eintreffen des Stoppsignals SP beendet die Zeitmessungen. Das Ergebnis der Messungen sind Messwerte T1, T2, die die Pulsdauer des Testpulses 220 repräsentieren und zur Beurteilung der Funktion des Arbeitstaktsignals CLK der Positionsmesseinrichtung 10 an die Steuereinheit 110 ausgegeben werden. Anschließend werden die Zeitmesseinheiten 254, 256 über ein Rücksetzsignal RES zurückgesetzt.

Die Zeitmesseinheiten 254, 256 können beispielsweise als Zähler realisiert sein, deren Zählwert im Zeitraster des Arbeitstaktsignals ACLK der Folgeelektronik 100 vom Zeitpunkt des Eintreffens des Startsignals ST bis zum Zeitpunkt des Eintreffens des Stoppsignals SP hochgezählt wird. Die Zählerwerte (Messwerte T1, T2) entsprechen dann angenähert (mit einer zeitlichen Auflösung des Zeitrasters des Arbeitstaktsignals ACLK) der Pulsdauer tm des Testpulses 220.

Diese Lösung erreicht ein hohes Maß an Funktionssicherheit, da zwei redundant erzeugte Messwerte T1, T2 für die Auswertung zur Verfügung stehen.

Figur 5 zeigt ein weiteres Ausführungsbeispiel einer Pulsmesseinheit 350. Sie umfasst neben einer Start-/Stopp-Einheit 352, einer ersten Zeitmesseinheit 354 und einer zweiten Zeitmesseinheit 356 noch einen Multiplexer 358.

Die Funktion der Start-/Stopp-Einheit 352 entspricht der der Start-/Stopp-Einheit 252 des vorhergehenden Ausführungsbeispiels.

Die von den Zeitmesseinheiten 354, 356 gemessenen Messwerte T1, T2 sind nun dem Multiplexer 358 zugeführt und die Steuereinheit 110 kann mittels eines Auswahlsignals SEL jeweils einen der Messwerte T1, T2 für die Auswertung auswählen.

Diese Lösung hat gegenüber dem vorhergehend beschriebenen Ausführungsbeispiel den Vorteil, dass die Anzahl der Verbindungsleitungen, die für die Ausgabe der Messwerte T1, T2 an die Steuereinheit 110 benötigt werden, halbiert werden kann. Dagegen wird lediglich eine neue Steuerleitung für das Auswahlsignal SEL benötigt. Im laufenden Betrieb, wenn beispielsweise die Folgeelektronik kontinuierlich in kurzen Zeitabständen hintereinander Positionswerte von der Positionsmesseinrichtung 10 anfordert, kann es auch ausreichend sein, wenn je Übertragung eines Antwortdatenrahmens 210 abwechselnd nur einer der Messwerte T1, T2 ausgewertet wird. Dies reduziert zusätzlich den Rechenaufwand für die Auswertung. In einer Variante kann die Steuerleitung SEL auch in der Pulsmesseinheit 350 generiert werden, so dass automatisch abwechselnd nur einer der Messwerte T1, T2 zur Auswertung an die Steuereinheit 110 ausgegeben wird.

Im unwahrscheinlichen, aber theoretisch möglichen Fall, dass das Auswahlsignal SEL ausfällt und immer der gleiche Messwert T1, T2 nur einer der Zeitmesseinheiten 354, 356 ausgegeben und ausgewertet wird, ergibt sich wieder das oben bereits beschriebene Problem, dass bei einem "Einfrieren" der Zeitmesseinheit 354, 356, deren Messwert zur Auswertung gelangt, wieder keine Möglichkeit besteht, den Fehler zu bemerken. Die Überwachung des Arbeitstaktsignals CLK der Positionsmesseinrichtung wäre außer Kraft gesetzt.

Um auch diesen äußerst unwahrscheinlichen Fehlerfall erkennbar zu machen, sind die Zeitmesseinheiten 354, 356 so ausgestaltet, dass die erste Zeitmesseinheit 354 ein anderes Messverhalten aufweist als die zweite Zeitmesseinheit 356 und sich dadurch die Messwerte T1, T2 voneinander unterscheiden. Einige Beispiele hierfür sind:
- unterschiedliche Zählrichtung der verwendeten Zähler,
- unterschiedliche Codierung der Messwerte T1, T2,
- ein bekannter mathematischer Zusammenhang (z.B. Offset) zwischen den Messwerten T1, T2.

Hierdurch wird erreicht, dass sich die Messwerte T1, T2 der beiden Zeitmesseinheiten 354, 356 sicher voneinander unterscheiden. Durch das bekannte Messverhalten jeder Zeitmesseinheit 354, 356 kann in der Steuereinheit 110 von den Messwerten T1, T2 wieder auf die gemessene Zeitdauer tm des Testpulses 220 geschlossen werden. Ein "Einfrieren" einer der Zeitmesseinheiten 354, 356 kann sicher erkannt werden.

Durch die Verwendung von Zeitmesseinheiten, die unterschiedliche Zählverhalten aufweisen, kann auch die Funktionssicherheit der Pulsmesseinheit 250 des vorhergehenden Ausführungsbeispiels noch weiter erhöht werden.

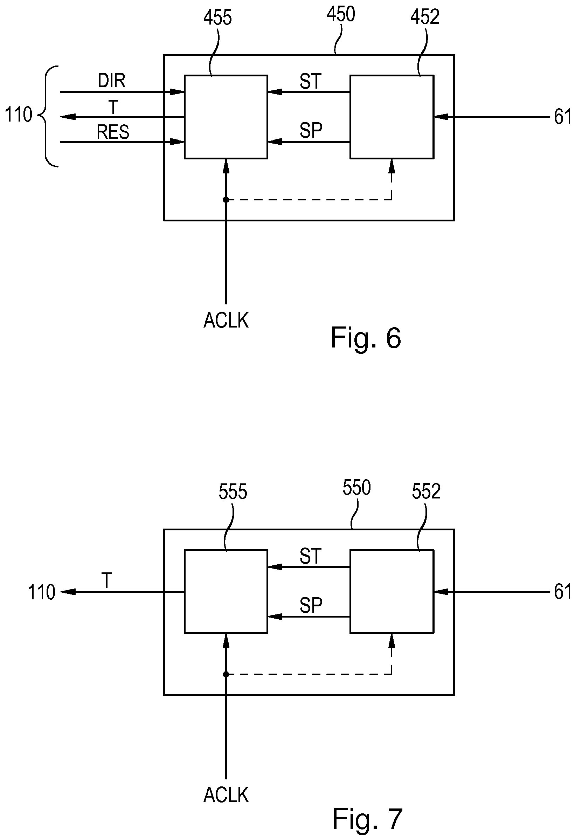

Figur 6 zeigt ein weiteres Ausführungsbeispiel einer Pulsmesseinheit 450. Sie umfasst eine gegenüber den vorhergehenden Ausführungsbeispielen unveränderte Start-/Stopp-Einheit 452, sowie eine Zeitmesseinheit 455.

Die Zeitmesseinheit 455 ist so ausgestaltet, dass sie einen forciert sich ändernden Messwert T generiert. In anderen Worten wird einem unbemerkten "Einfrieren" des Messwerts, bzw. der Zeitmesseinheit 455 dadurch vorgebeugt, dass sich der Messwert T, der die Pulsdauer tm des Testpulses 220 repräsentiert, bei jeder Messung zwingend ändert. Das kann dadurch erreicht werden, dass die Zeitmesseinheit 455 so ausgestaltet ist, dass ihr Messverhalten änderbar ist. So kann beispielsweise die Zählrichtung eines Zählers, der in der Zeitmesseinheit 455 die Zeitmessung durchführt, gesteuert von der Steuereinheit 110 über ein Richtungssignal DIR oder auch automatisch, nach jeder Messung umgeschaltet werden. Alternativen hierzu sind:
- Änderung der Codierung aufeinanderfolgender Messwerte T, oder
- Änderung eines mathematischen Zusammenhangs (z.B. Offset) zwischen aufeinanderfolgenden Messwerten T.

Der Messwert T, der die Pulsdauer tm des Testpulses 220 repräsentiert, ist zur Auswertung wieder der Steuereinheit 110 zugeführt. Auch hier kann ein Rücksetzsignal RES zum Zurücksetzen des Zählers vorgesehen sein.

Diese Variante ist deshalb besonders vorteilhaft, weil sie bei unwesentlich komplexerem Aufbau der Zeitmesseinheit 455 mit sehr wenigen Funktionseinheiten auskommt.

Figur 7 zeigt ein abschließendes Ausführungsbeispiel für eine Pulsmesseinheit 550. Auch sie umfasst eine unveränderte Start-/Stopp-Einheit 552 und eine Zeitmesseinheit 555.

Wie im vorhergehenden Ausführungsbeispiel basiert die Zeitmesseinheit 555 darauf, dass sich der Messwert T bei jeder Messung forciert ändert. Dies wird hier jedoch dadurch erreicht, dass die Zeitmesseinheit 555 einen größeren Messbereich aufweist, als zur Messung eines Testpulses 220 erforderlich ist. Mit Vorteil sind mit der Zeitmesseinheit 555 mehrere Testpulse 220 hintereinander messbar und die Zeitmesseinheit 555 beginnt bei einem Überlauf des Messbereichs wieder bei null zu messen. Dies bewirkt, dass aufeinanderfolgende Messungen in der Zeitmesseinheit 555 aufsummiert werden. Unter Berücksichtigung eines möglichen Überlaufs kann die Steuereinheit 110 unter Verwendung des bei der vorhergehenden Messung erlangten Messwerts die aktuell gemessene Pulsdauer tm des Testpulses 220 ermitteln und auswerten. Ein "Einfrieren" der Zeitmesseinheit 555 kann auch in diesem Ausführungsbeispiel sicher erkannt werden.

Auf Steuersignale DIR, RES, SEL der Steuereinheit 110 an die Pulsmesseinheit 550 kann verzichtet werden.

Im Rahmen der Ansprüche sind selbstverständlich noch weitere Ausführungsformen von Pulsmesseinheiten realisierbar.

## Patentansprüche

1. Vorrichtung zur Überwachung eines Arbeitstaktsignals (CLK) einer Positionsmesseinrichtung (10), die über einen Datenübertragungskanal (60) mit einer Folgeelektronik (100) verbunden ist und der Datenübertragungskanal (60) eine Datenleitung (61) aufweist, über die Datensignale von einer Schnittstelleneinheit (40) der Positionsmesseinrichtung (10) zu einer Schnittstelleneinheit (140) der Folgeelektronik (100) übertragbar sind, wobei
- die Positionsmesseinrichtung (10) Messgerätekomponenten (20, 30) aufweist, denen das Arbeitstaktsignal (CLK) zugeführt ist und Funktionen der Messgerätekomponenten (20, 30) in einem Zeitraster des Arbeitstaktsignals (CLK) ablaufen,
- die Schnittstelleneinheit (40) der Positionsmesseinrichtung (10) eine Pulserzeugungseinheit (50) umfasst, mit der basierend auf dem Zeitraster des Arbeitstaktsignals (CLK) ein Testpuls (220) erzeugbar ist und der Testpuls (220) über die Datenleitung (61) zur Schnittstelleneinheit (140) der Folgeelektronik (100) übertragbar ist und
- die Schnittstelleneinheit (140) der Folgeelektronik (100) eine Pulsmesseinheit (150, 250, 350, 450, 550) umfasst, mit der eine Pulsdauer (tm) des Testpulses (220) im Zeitraster eines Arbeitstaktsignals (ACLK) der Folgeelektronik (100) funktional sicher messbar und ein Messwert (T, T1, T2), der die Pulsdauer (tm) repräsentiert, zur Auswertung an eine Steuereinheit (110) ausgebbar, ist, **dadurch gekennzeichnet, dass** die Pulsmesseinheit (150, 250, 350) eine erste Zeitmesseinheit (254, 354) und eine zweite Zeitmesseinheit (256, 356) umfasst, mit denen redundante Messwerte (T1, T2) generierbar sind, die die Zeitdauer (tm) des Testpulses (220) repräsentieren.

2. Vorrichtung nach Anspruch 1, wobei die Pulsmesseinheit (150, 250, 350, 450, 550) eine Start-/Stopp-Einheit umfasst, die geeignet ausgestaltet ist, in Abhängigkeit von einem Startereignis (START) und einem Stoppereignis (STOP), die den Testpuls (220) begrenzen, ein Startsignal (ST) und ein Stoppsignal (SP) an wenigstens eine Zeitmesseinheit (254, 256, 354, 355, 455, 555) auszugeben.

3. Vorrichtung nach einem der vorhergehenden Ansprüche, wobei die erste Zeitmesseinheit (254, 354) ein anderes Messverhalten aufweist als die zweite Zeitmesseinheit (256, 356).

4. Vorrichtung nach einem der vorhergehenden Ansprüche, wobei die Pulsmesseinheit (350) einen Multiplexer (358) umfasst, dem die Messwerte (T1, T2) zugeführt sind und mit dem wählbar ist, ob der erste Messwert (T1) oder der zweite Messwert (T2) zur Steuereinheit (110) ausgegeben wird.

5. Vorrichtung nach einem der Ansprüche 1 oder 2, wobei die Pulsmesseinheit (450, 550) eine Zeitmesseinheit (455, 555) umfasst, die einen forciert sich ändernden Messwert (T) generiert, der die Zeitdauer (tm) des Testpulses (220) repräsentiert.

6. Verfahren zur Überwachung eines Arbeitstaktsignals (CLK) einer Positionsmesseinrichtung (10), die über einen Datenübertragungskanal (60) mit einer Folgeelektronik (100) verbunden ist und der Datenübertragungskanal (60) eine Datenleitung (61) aufweist, über die Datensignale von einer Schnittstelleneinheit (40) der Positionsmesseinrichtung (10) zu einer Schnittstelleneinheit (140) der Folgeelektronik (100) übertragbar sind, wobei
- die Positionsmesseinrichtung (10) Messgerätekomponenten (20, 30) aufweist, denen das Arbeitstaktsignal (CLK) zugeführt wird und Funktionen der Messgerätekomponenten (20, 30) in einem Zeitraster des Arbeitstaktsignals (CLK) ablaufen,
- die Schnittstelleneinheit (40) der Positionsmesseinrichtung (10) eine Pulserzeugungseinheit (50) umfasst, mit der basierend auf dem Zeitraster des Arbeitstaktsignals (CLK) ein Testpuls (220) erzeugt wird und der Testpuls (220) über die Datenleitung (61) zur Schnittstelleneinheit (140) der Folgeelektronik (100) übertragen wird und
- die Schnittstelleneinheit (140) der Folgeelektronik (100) eine Pulsmesseinheit (150, 250, 350, 450, 550) umfasst, mit der eine Pulsdauer (tm) des Testpulses (220) im Zeitraster eines Arbeitstaktsignals (ACLK) der Folgeelektronik (100) funktional sicher gemessen und ein Messwert (T, T1, T2), der die Pulsdauer (tm) repräsentiert, zur Auswertung an eine Steuereinheit (110) ausgegeben wird, **dadurch gekennzeichnet**, die Pulsmesseinheit (150, 250, 350) eine erste Zeitmesseinheit (254, 354) und eine zweite Zeitmesseinheit (256, 356) umfasst, die redundante Messwerte (T1, T2) generieren, die die Zeitdauer (tm) des Testpulses (220) repräsentieren.

7. Verfahren nach Anspruch 6, wobei die Pulsmesseinheit (150, 250, 350, 450, 550) eine Start-/Stopp-Einheit umfasst, die in Abhängigkeit von einem Startereignis (START) und einem Stoppereignis (STOP), die den Testpuls (220) begrenzen, ein Startsignal (ST) und ein Stoppsignal (SP) an wenigstens eine Zeitmesseinheit (254, 256, 354, 355, 455, 555) ausgibt.

8. Verfahren nach einem der Ansprüche 6 oder 7, wobei die die erste Zeitmesseinheit (254, 354) ein anderes Messverhalten aufweist als die zweite Zeitmesseinheit (256, 356).

9. Verfahren nach einem der Ansprüche 6 oder 7, wobei die Pulsmesseinheit (450, 550) eine Zeitmesseinheit (455, 555) umfasst, die einen forciert sich ändernden Messwert (T) generiert, der die Zeitdauer (tm) des Testpulses (220) repräsentiert.

## Claims

1. Apparatus for monitoring an operating clock signal (CLK) of a position measuring device (10) connected to downstream electronics (100) via a data transmission channel (60), the data transmission channel (60) having a data line (61), via which data signals are transmittable from an interface unit (40) of the position measuring device (10) to an interface unit (140) of the downstream electronics (100), wherein
- the position measuring device (10) has measuring instrument components (20, 30) to which the operating clock signal (CLK) is fed and functions of the measuring instrument components (20, 30) proceed in a time frame of the operating clock signal (CLK),
- the interface unit (40) of the position measuring device (10) comprises a pulse generating unit (50), by means of which a test pulse (220) is generatable on the basis of the time frame of the operating clock signal (CLK) and the test pulse (220) is transmittable via the data line (61) to the interface unit (140) of the downstream electronics (100), and
- the interface unit (140) of the downstream electronics (100) comprises a pulse measuring unit (150, 250, 350, 450, 550), by means of which a pulse duration (tm) of the test pulse (220) is measurable functionally reliably in the time frame of an operating clock signal (ACLK) of the downstream electronics (100) and a measured value (T, T1, T2) representing the pulse duration (tm) is able to be output to a control unit (110) for evaluation,
**characterized in that** the pulse measuring unit (150, 250, 350) comprises a first time measuring unit (254, 354) and a second time measuring unit (256, 356), by means of which redundant measured values (T1, T2) representing the time duration (tm) of the test pulse (220) are generatable.

2. Apparatus according to Claim 1, wherein the pulse measuring unit (150, 250, 350, 450, 550) comprises a start/stop unit configured suitably to output a start signal (ST) and a stop signal (SP) to at least one time measuring unit (254, 256, 354, 355, 455, 555) depending on a start event (START) and a stop event (STOP) bounding the test pulse (220).

3. Apparatus according to either of the preceding claims, wherein the first time measuring unit (254, 354) has a different measurement behaviour from the second time measuring unit (256, 356).

4. Apparatus according to any of the preceding claims, wherein the pulse measuring unit (350) comprises a multiplexer (358), to which the measured values (T1, T2) are fed and which makes it possible to select whether the first measured value (T1) or the second measured value (T2) is output to the control unit (110).

5. Apparatus according to either of Claims 1 and 2, wherein the pulse measuring unit (450, 550) comprises a time measuring unit (455, 555), which generates a forcedly changing measured value (T) representing the time duration (tm) of the test pulse (220).

6. Method for monitoring an operating clock signal (CLK) of a position measuring device (10) connected to downstream electronics (100) via a data transmission channel (60), the data transmission channel (60) having a data line (61), via which data signals are transmittable from an interface unit (40) of the position measuring device (10) to an interface unit (140) of the downstream electronics (100), wherein
- the position measuring device (10) has measuring instrument components (20, 30) to which the operating clock signal (CLK) is fed and functions of the measuring instrument components (20, 30) proceed in a time frame of the operating clock signal (CLK),
- the interface unit (40) of the position measuring device (10) comprises a pulse generating unit (50), by means of which a test pulse (220) is generated on the basis of the time frame of the operating clock signal (CLK) and the test pulse (220) is transmitted via the data line (61) to the interface unit (140) of the downstream electronics (100), and
- the interface unit (140) of the downstream electronics (100) comprises a pulse measuring unit (150, 250, 350, 450, 550), by means of which a pulse duration (tm) of the test pulse (220) is measured functionally reliably in the time frame of an operating clock signal (ACLK) of the downstream electronics (100) and a measured value (T, T1 T2) representing the pulse duration (tm) is output to a control unit (110) for evaluation,
**characterized in that** the pulse measuring unit (150, 250, 350) comprises a first time measuring unit (254, 354) and a second time measuring unit (256, 356), which generate redundant measured values (T1, T2) representing the time duration (tm) of the test pulse (220).

7. Method according to Claim 6, wherein the pulse measuring unit (150, 250, 350, 450, 550) comprises a start/stop unit, which outputs a start signal (ST) and a stop signal (SP) to at least one time measuring unit (254, 256, 354, 355, 455, 555) depending on a start event (START) and a stop event (STOP) bounding the test pulse (220) .

8. Method according to either of Claims 6 and 7, wherein the first time measuring unit (254, 354) has a different measurement behaviour from the second time measuring unit (256, 356).

9. Method according to either of Claims 6 and 7, wherein the pulse measuring unit (450, 550) comprises a time measuring unit (455, 555), which generates a forcedly changing measured value (T) representing the time duration (tm) of the test pulse (220).

## Revendications

1. Dispositif de surveillance d'un signal d'horloge de travail (CLK) d'un dispositif de mesure de position (10) qui est relié par l'intermédiaire d'un canal de transmission de données (60) à une électronique consécutive (100) et le canal de transmission de données (60) comportant une ligne de données (61) qui permet de transmettre des signaux de données d'une interface (40) du dispositif de mesure de position (10) à une unité d'interface (140) de l'électronique consécutive (100), dans lequel
- le dispositif de mesure de position (10) comporte des composants d'appareil de mesure (20, 30) auxquels est acheminé le signal d'horloge de travail (CLK) et qui exécutent des fonctions des composants d'appareil de mesure (20, 30) dans une trame temporelle du signal d'horloge de travail (CLK),
- l'unité d'interface (40) du dispositif de mesure de position (10) comprend une unité génératrice d'impulsions (50) permettant de générer une impulsion de test (220) sur la base de la trame temporelle du signal d'horloge de travail (CLK) et de transmettre l'impulsion de test (220) par l'intermédiaire de la ligne de données (61) à l'unité d'interface (140) de l'électronique consécutive (100), et
- l'unité d'interface (140) de l'électronique consécutive (100) comprend une unité de mesure d'impulsions (150, 250, 350, 450, 550) permettant de mesurer fonctionnellement de manière sûre la durée (tm) de l'impulsion de test (220) dans la trame temporelle d'un signal d'horloge de travail (ACLK) de l'électronique consécutive (100) et de délivrer une valeur de mesure (T, T1, T2), qui représente la durée d'impulsion (tm), à une unité de commande (110) à des fins d'évaluation, **caractérisé en ce que** l'unité de mesure d'impulsions (150, 250, 350) comprend une première unité de mesure de temps (254, 354) et une seconde unité de mesure de temps (256, 356) permettant de générer des valeurs de mesure redondantes (T1, T2) qui représentent la durée (tm) de l'impulsion test (220).

2. Dispositif selon la revendication 1, dans lequel l'unité de mesure d'impulsions (150, 250, 350, 450, 550) comprend une unité de démarrage/arrêt conçue pour délivrer un signal de démarrage (ST) et un signal d'arrêt (SP) à au moins une unité de mesure de temps (254, 256, 354, 355, 455, 555) en réponse à un événement de démarrage (START) et à un événement d'arrêt (STOP) qui délimitent l'impulsion de test (220).

3. Dispositif selon l'une des revendications précédentes, dans lequel la première unité de mesure de temps (254, 354) présente un comportement de mesure différent de celui de la seconde unité de mesure de temps (256, 356).

4. Dispositif selon l'une des revendications précédentes, dans lequel l'unité de mesure d'impulsions (350) comprend un multiplexeur (358) auquel sont acheminées les valeurs de mesure (T1, T2) et permettant de sélectionner si la première valeur de mesure (Tl) ou la seconde valeur de mesure (T2) est délivrée à l'unité de commande (110).

5. Dispositif selon l'une des revendications 1 ou 2, dans lequel l'unité de mesure d'impulsions (450, 550) comprend une unité de mesure de temps (455, 555) qui génère une valeur de mesure à variation forcée (T) représentant la durée (tm) de l'impulsion de test (220).

6. Procédé de surveillance d'un signal d'horloge de travail (CLK) d'un dispositif de mesure de position (10) qui est relié par l'intermédiaire d'un canal de transmission de données (60) à une électronique consécutive (100) et le canal de transmission de données (60) comportant une ligne de données (61) qui permet de transmettre des signaux de données d'une interface (40) du dispositif de mesure de position (10) à une unité d'interface (140) de l'électronique consécutive (100), dans lequel
- le dispositif de mesure de position (10) comporte des composants d'appareil de mesure (20, 30) auxquels est acheminé le signal d'horloge de travail (CLK) et qui exécutent des fonctions des composants d'appareil de mesure (20, 30) dans une trame temporelle du signal d'horloge de travail (CLK),
- l'unité d'interface (40) du dispositif de mesure de position (10) comprend une unité génératrice d'impulsions (50) générant une impulsion de test (220) sur la base de la trame temporelle du signal d'horloge de travail (CLK) et transmettant l'impulsion de test (220) par l'intermédiaire de la ligne de données (61) à l'unité d'interface (140) de l'électronique consécutive (100), et
- l'unité d'interface (140) de l'électronique consécutive (100) comprend une unité de mesure d'impulsions (150, 250, 350, 450, 550) mesurant fonctionnellement de manière sûre une durée d'impulsion (tm) de l'impulsion de test (220) dans la trame temporelle d'un signal d'horloge de travail (ACLK) de l'électronique consécutive (100) et délivrant une valeur de mesure (T, T1, T2), qui représente la durée d'impulsion (tm), à une unité de commande (110) à des fins d'évaluation,
**caractérisé en ce que** l'unité de mesure d'impulsions (150, 250, 350) comprend une première unité de mesure de temps (254, 354) et une seconde unité de mesure de temps (256, 356) générant des valeurs de mesure redondantes (T1, T2) qui représentent la durée (tm) de l'impulsion test (220).

7. Procédé selon la revendication 6, dans lequel l'unité de mesure d'impulsions (150, 250, 350, 450, 550) comprend une unité de démarrage/arrêt qui délivre un signal de démarrage (ST) et un signal d'arrêt (SP) à au moins une unité de mesure de temps (254, 256, 354, 355, 455, 555) en réponse à un événement de démarrage (START) et à un événement d'arrêt (STOP) qui délimitent l'impulsion de test (220).

8. Procédé selon l'une des revendications 6 ou 7, dans lequel la première unité de mesure de temps (254, 354) présente un comportement de mesure différent de celui de la seconde unité de mesure de temps (256, 356).

9. Procédé selon l'une des revendications 6 ou 7, dans lequel l'unité de mesure d'impulsions (450, 550) comprend une unité de mesure de temps (455, 555) qui génère une valeur de mesure à variation forcée (T) représentant la durée (tm) de l'impulsion de test (220).
